# EUROPEAN PATENT APPLICATION

(11) **EP 4 748 567 A1**
(43) Date of publication of application: **27.05.2026**
(21) Application number: 24214821.1
(22) Date of filing: 22.11.2024
(51) Int. Cl.: B32B 17/10

(54) **HOT STAMPING OF STRUCTURES ON NON-PLASTICIZED POLYVINYL BUTYRAL FILMS FOR GLAZING APPLICATIONS**

(71) Applicant: Kuraray Europe GmbH, 65795 Hattersheim (DE)
(72) Inventor: Keller, Uwe, 77210 Avon (FR); Hoffmann, Andreas, Troisdorf (DE)
(74) Representative: Janßen, Christian Oliver

(57) **Abstract**

The invention is directed to a method of providing at least one first surface area of a PVB film with a functional layer and at least one second surface area of a PVB film not with a functional layer, characterized in bringing a transfer film comprising at least one adhesive layer and at least one functional layer with the adhesive layer in contact with a surface of the PVB film, pressing the transfer film on the at least one first surface area of the PVB film at temperatures of 100 - 200°C and removing the transfer film from the at least one second surface area of the PVB film.

## Description

The present invention is directed to provide laminated lazing with flat, metallic structures having a mirror-like reflective appearance mainly for decorative purposes.

### TECHNICAL BACKGROUND

Polyvinyl butyral (PVB) is the most widely used interlayer in laminated glazing. Its thermoplastic nature and dedicated surface structure is chosen in a way, that it meets all requirements for the production of laminated safety glazing. The softness (T_{g} < 30°C) of a standardized PVB film like Trosifol^{®} UltraClear (available from Kuraray Europe GmbH) provides the later laminated glazing with an excellent penetration resistance. And a surface roughness R_{z} of 40 µm prevents deairing problems during lamination process.

Due to these properties, functionalization of classic PVB films in any kind of coating process is very difficult. For example, it is known from JPH0724957A that sputtering of metallic layers on an interlayer substrate is possible, which then can be integrated into laminated glazing. However, sputtering is often facilitated as a roll-to-roll process and therefore not (or only with further development) capable of generating structures of metallic layers on a interlayer film.

In part, such difficulties can be overcome by functionalization of a thin and plasticizer free PVB film having higher glass transition temperatures. For example, WO2019038043A1, WO2019121535A1 or WO2022063962A1 describe the functionalization of interlayer films by various printing techniques. The method of this invention allows the functionalization of PVB films with an ink which might contain flat metallic pigments. However, the optical and electrical properties of a print with metallic pigments do not reach the properties of a coherent metallic layer, due to imperfect orientation of the pigments in the matrix and percolation thresholds in the printed layer.

The intention of this invention is to overcome above mentioned challenges, by use of hot stamping technique.

### OBJECT OF THE INVENTION

Accordingly, object of the invention is a method of providing at least one first surface area of a PVB film with a functional layer and at least a second surface area of a PVB film not with a functional layer characterized in bringing a transfer film comprising at least one adhesive layer and at least one functional layer with the adhesive layer in contact with a surface of the PVB film, pressing the transfer film on the at least first surface area of the PVB film at temperatures of 100 - 200°C and removing the transfer film from the at least second surface area of the PVB film.

Further object of the invention is a method for manufacturing a laminated glazing comprising two glass panes combined with an interlayer film comprising at least one plasticized PVB film provided with a functional layer characterized in a) bringing a transfer film comprising at least one adhesive layer and at least one functional layer with the adhesive layer into contact with a surface of the plasticized PVB and b) pressing the transfer film to the at least first surface area the PVB film at temperatures of 100 - 200°C and c) removing the transfer film from the at least second surface area of the plasticized PVB film and d) positioning the thus obtained plasticized PVB film having a functional layer between the two glass sheets and e) providing elevated temperature and pressure to obtain the laminated glazing.

For clarification, the terms "first surface area" and "second surface area" refer to respective parts of the total area of one side of a PVB film, i.e. the total area of one side of a PVB film is the sum of the first and second surface areas.

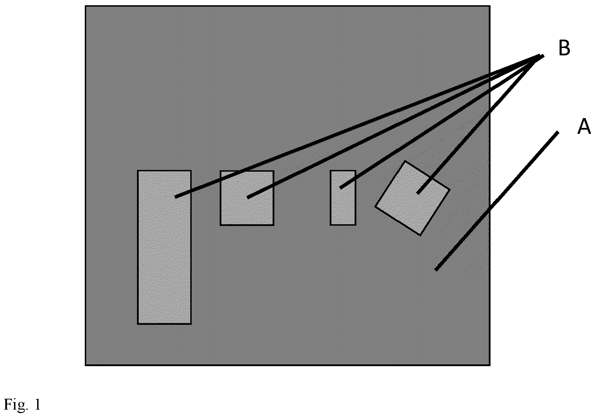

With the method of the invention, a plurality of first surface areas having same or different shape and size can be provided with a functional layer. Fig. 1 shows by way of example one side of a PVB film with a plurality of first surface areas B, wherein the remaining - second surface A - is not provided with a functional layer.

In a preferred embodiment, the laminated glazing has an optical density > 0.5 when measured with a ColorLite Densitometer sd350 at the positions provided with the functional layer.

### BRIEF DESCRIPTION OF THE DRAWINGS

Fig. 1 shows an example of first and second surface areas
Fig. 2 shows a variant of the method of the invention.
Fig. 3 shows an illustration of the functionalized film of the invention with a hot stamped structure with one adhesive layer and one functional layer, on top of a PVB film with an underlaying carrier film.
Fig. 4 shows an embodiment of the film of invention with a hot stamped structure with two adhesive layers and one functional layer, on top of a PVB film with an underlaying carrier film.
Fig. 5 shows a hot stamped structure with two adhesive layers and one functional layer, on top of a print on a PVB film with an underlaying carrier film.
Fig. 6 shows an illustration of a glass laminate, consisting of two glass planes, a PVB interlayer and a hot stamped structure, which consist of two adhesive layers and one functional layer.
Fig. 7 shows a variant of the invention with a glass laminate, consisting of two glass planes, with one glass plane having a ceramic print (with a left out region which is beneath the hot stamped structure), a PVB interlayer and a hot stamped structure, which consist of two adhesive layers and one functional layer.
Fig. 8 shows another variant with a glass laminate, consisting of two glass planes, a PVB interlayer, a printed layer (with a left out region which is beneath the hot stamped structure), and a hot stamped structure, which consist of two adhesive layers and one functional layer.

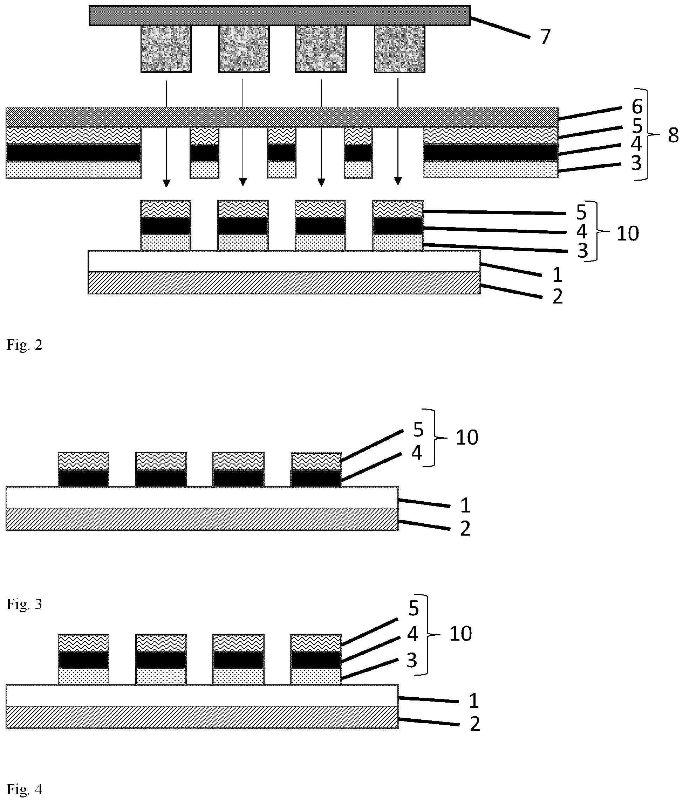

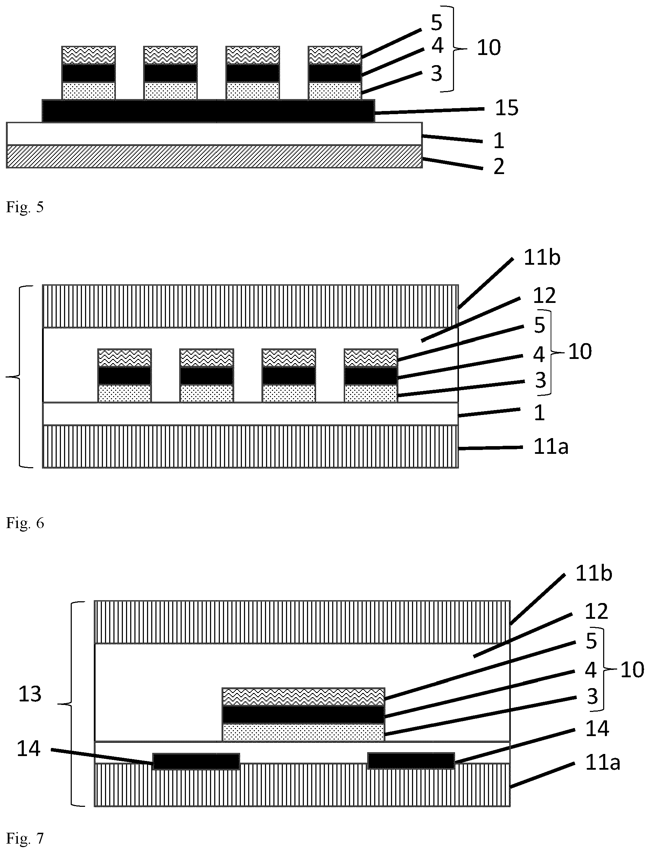

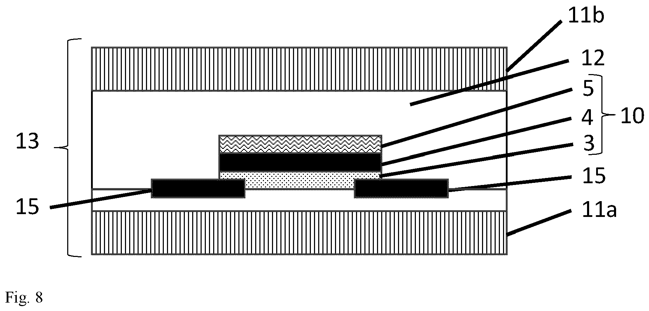

The numbers in Fig. 2 - 8 stand for: 1: PVB layer with a T_{g} > 60°C; 2: Carrier film; 3: adhesive layer; 4: functional layer; 5: adhesive layer; 6: release liner; 7: stamping tool; 8: transfer film; 10: hot stamped structure; 11a / 11b: glass; 12: PVB with a T_{g} < 40; 13: glass laminate; 14: ceramic print on glass; 15: print on PVB

### DETAILED DESCRIPTION

In a first embodiment of the invention, the transfer film is pressed on the at least first surface area the PVB film, which is performed with a tool having surface areas corresponding to the at least first and second surface areas of the PVB film and the transfer film is pressed with wherein the surface area of the tool corresponding to the at least first surface areas of the PVB film to the at least first surface area the PVB film.

For example, the stamping tool may be provided with one or more surface areas corresponding to the at least first surface areas of the PVB film being elevated relative to surface areas corresponding to the second surface areas of the PVB film. Since the elevated surface areas can provide more pressure to the transfer film, the first surface areas will adhere to the PVB film, whereas the second surface areas do not.

In a variant of the invention, the tool has at least at the surface areas corresponding to the at least first surface areas of the PVB film temperatures of 100 - 200°C.

The transfer film may be pressed to the at least one surface of the PVB film by vertical stamping or roll-on stamping.

The PVB film may have the following compositions:
- the PVB film comprises 0 to 10 wght% of at least one plasticizer and the adhesive layer comprises PVB film comprising 0 to 10 wght% of at least one plasticizer
- the PVB film comprises 0 to 10 wght% of at least one plasticizer and the adhesive layer comprises polyacrylate, polymethacrylate, poly urethane, ethyl vinyl acetate, ionomer or silicone
- the PVB film comprises 11 to 30 wght% of at least one plasticizer and the adhesive layer comprises PVB film comprising 0 to 10 wght% of at least one plasticizer.

The transfer film may be provided on a carrier film wherein the functional layer is positioned adjacent to the carrier film. The transfer film has preferred a thickness of less than 100 µm.

The functional layer may have thickness of at most 50 µm (like 10-50 µm) and can comprise metals, inks, dyes, ceramics or pigments, wherein the functional layer can be produced by physical vapor deposition or chemical vapor deposition. Further, the functional layer may be produced by flexo printing, gravure printing, screen printing, offset printing, ink jet printing, photolithographic print and laser printing.

The functional layer may be a discrete structure or motive which may further occupy less than 90% of the surface of the PVB film.

### Polyvinyl Acetal

The PVB film contains polyvinyl acetals, which are produced by acetalisation of polyvinyl alcohol or ethylene vinyl alcohol copolymer.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the sublayers may be identical or different, pure or a mixture of polyvinyl alcohols or ethylene vinyl alcohol copolymers with different degree of polymerisation or degree of hydrolysis.

The polyvinyl acetate content of the polyvinyl acetals in the PVB film can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

The PVB film preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

### Plasticizer

The PVB film may contain as plasticiser one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

Preferable, triethylene glycol-bis-2-ethyl hexanoate (3GO or 3G8) is used as plasticiser.

In addition, the PVB film may contain further additives, such as alkaline or alkaline earth metal salts residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

### EXAMPLES

### Application example 1:

Figure 2 illustrates the functionalization of a PVB film via hot stamping. A bilaminate of PVB (1) and PET (2) was used as a substrate film in the hot stamping process. The PVB layer (1) had a T_{g} of 65°C, a thickness of 25 µm and a surface roughness Rz < 5 µm on the side opposing to the PET layer. The underlaying PET layer had a thickness of 75 µm. A multilayer foil (8) with the following stack was used as a transfer foil in the hot stamping process: a PET release liner (6) on the bottom, an adhesive layer in a thickness of 0.1 µm to 2 µm (5) on top of the release liner (6), a functional layer (4) of chromium in a thickness of 4 µm, sandwiched by the adhesive layers (3) and (5) and another adhesive layer in a thickness of 0.1 µm to 2 µm (3) on top of the functional layer (4).

Prior to stamping, the foils and the stamping tool were positioned with the stamping tool on top, the transfer foil beneath it and the substrate film on the bottom. The following sides were facing each other during stamping: the release liner (6) was facing the elevated motive of the stamping tool (7) and the adhesive layer (3) was facing the PVB layer (2) of the substrate film. Vertical stamping was conducted at a tool temperature of 190°C and with a contact time of 0.5 s.

For the preparation of a laminated glazing, the following layers were stacked: a pane of washed Planiclear^{®} glass (11a), a PVB film (9) with a hot stamped structure on its surface (the hot stamped structure was oriented towards a Trosifol^{®} UltraClear PVB layer), a layer of Trosifol^{®} UltraClear 0.76 mm (12), and another washed Planiclear^{®} glass plane (11b). All layers were fixed in the above described sequence by applying adhesive tapes to the outer glass sheets. This stack was then pre-laminated in a vacuum bag by applying a vacuum at room temperature for 15 minutes, followed by a vacuum at 110°C for another 15 minutes. After pre-lamination the pre laminate was autoclaved in an autoclave at 140 °C and a pressure of 12 bar for 90 minutes. The resulting glass laminate shows decorative structures with mirror like reflections and had an optical density as measured with a ColorLite Densitometer sd350 of 1.4.

## Claims

1. Method of providing at least one first surface area of a PVB film with a functional layer and at least a second surface area of a PVB film not with a functional layer **characterized in** bringing a transfer film comprising at least one adhesive layer and at least one functional layer with the adhesive layer in contact with a surface of the PVB film, pressing the transfer film on the at least first surface area of the PVB film at temperatures of 100 - 200°C and removing the transfer film from the at least second surface area of the PVB film.

2. Method according to claim 1, **characterized in that** pressing the transfer film on the at least first surface area the PVB film is performed with a tool having surface areas corresponding to the at least first and second surface areas of the PVB film and the transfer film is pressed with wherein the surface area of the tool corresponding to the at least first surface areas of the PVB film to the at least first surface area the PVB film.

3. Method according to claim 2 **characterized in that** the tool has at least at the surface areas corresponding to the at least first surface areas of the PVB film temperatures of 100 - 200°C.

4. Method according to any of claims 1 to 3 **characterized in that** the transfer film is pressed to the at least one surface of the PVB film by vertical stamping or roll-on stamping.

5. Method according to any of claims 1 to 4 **characterized in that** the PVB film comprises 0 to 10 wght% of at least one plasticizer and the adhesive layer comprises PVB film comprising 0 to 10 wght% of at least one plasticizer.

6. Method according to any of claims 1 to 4 **characterized in that** the PVB film comprises 0 to 10 wght% of at least one plasticizer and the adhesive layer comprises polyacrylate, polymethacrylate, poly urethane, ethyl vinyl acetate, ionomer or silicone.

7. Method according to any of claims 1 to 4 **characterized in that** the PVB film comprises 11 to 30 wght% of at least one plasticizer and the adhesive layer comprises PVB film comprising 0 to 10 wght% of at least one plasticizer.

8. Method according to any of claims 1 to 7 **characterized in that** the transfer film is provided on a carrier film wherein the functional layer is positioned adjacent to the carrier film.

9. Method according to any of claims 1 to 8, **characterized in that** the transfer film has a thickness of less than 100 µm.

10. Method according to any of claims 1 to 9, **characterized in that** the functional layer comprises metals, inks, dyes, ceramics or pigments.

11. Method according to any of claims 1 to 10, **characterized in that** the functional layer has a thickness of at most 50 µm.

12. Method for manufacturing a laminated glazing comprising two glass panes combined with an interlayer film comprising at least one plasticized PVB film provided with a functional layer **characterized in** a) bringing a transfer film comprising at least one adhesive layer and at least one functional layer with the adhesive layer into contact with a surface of the plasticized PVB and b) pressing the transfer film to the at least first surface area the PVB film at temperatures of 100 - 200°C and c) removing the transfer film from the at least second surface area of the plasticized PVB film and d) positioning the thus obtained plasticized PVB film having a functional layer between the two glass sheets and e) providing elevated temperature and pressure to obtain the laminated glazing.

13. Method according to claim 12 **characterized in that** the laminated glazing has an optical density > 0.5 at the positions provided with the functional layer.
